# EUROPÄISCHE PATENTSCHRIFT

(11) **EP 3 805 167 B1**
(45) Veröffentlichungstag und Bekanntmachung des Hinweises auf die Patenterteilung: **28.12.2022**
(21) Anmeldenummer: 20200182.2
(22) Anmeldetag: 06.10.2020
(51) Int. Cl.: C03B 23/025, C03B 32/02, C03B 23/023, C03C 10/12

(54) **GLASKERAMIKBAUTEIL UND VERFAHREN ZUR HERSTELLUNG EINES GLASKERAMIKBAUTEILS**
GLASS CERAMIC COMPONENT AND METHOD FOR PRODUCING A GLASS CERAMIC COMPONENT
COMPOSANT EN VITROCÉRAMIQUE ET PROCÉDÉ DE FABRICATION D'UN COMPOSANT EN VITROCÉRAMIQUE

(30) Priorität: 08.10.2019 DE 102019126928
(43) Veröffentlichungstag der Anmeldung: 14.04.2021
(73) Patentinhaber: SCHOTT AG, 55122 Mainz (DE)
(72) Erfinder: MÜHLKE, Oliver, 65366 Geisenheim (DE); GÖTZ, Helga, 55246 Mainz-Kostheim (DE); VOLLMER, Markus, 55129 Mainz (DE); WÖLFINGER, Matthias, 65830 Kriftel (DE); SADOWSKY, Thomas, 55435 Gau-Algesheim (DE); HASELHORST, Georg, 88662 Überlingen (DE)
(74) Vertreter: Herrmann, Jochen

(56) Entgegenhaltungen:
- WO-A1-2014/115432
- WO-A1-2019/154922

## Beschreibung

Die Erfindung betrifft ein Glaskeramikbauteil, mit einer Abwinklung, die zwei flächenförmige Schenkel entlang eines in Richtung einer Bauteilhöhe verlaufenden Biegeabschnitts winklig miteinander verbindet, wobei die Abwinklung im Bereich einer Bauteilaußenseite einen konvexen Biegebereich aufweist, der in der Mitte der Bauteilhöhe einen Außen-Biegeradius aufweist, und wobei der Biegeabschnitt an seinen beiden längsseitigen Endbereichen Erhebungen aufweist.

Eine Glaskeramik ist ein spezieller Werkstoff, der durch die gezielte und temperaturgesteuerte Kristallisation, der sogenannten Keramisierung, aus einem zuvor in einer Schmelzwanne geschmolzenem und in der Regel plattenförmig geformten Glas, dem sogenannten Grünglas, hergestellt wird. Charakteristische Eigenschaften einer Glaskeramik sind hohe Temperaturwechselbeständigkeit sowie eine sehr geringe thermische Ausdehnung. Glaskeramiken werden zum Beispiel bei Herdplatten, als Kochfelder, als Ofenauskleidungen, als Abdeckscheibe für Strahlungsheizkörper, als Sichtscheiben für Öfen die zur Beheizung eingesetzt werden und als Sichtscheiben im Allgemeinen bei Verbrennungsaggregaten verwendet.

Bekannt sind abgewinkelte Sichtscheiben für Kamine oder Öfen, die üblicherweise mittels gasbetriebener Biegeanlagen mit sehr kleinen Radien von ca. 10 mm hergestellt werden. Hierbei werden die Grünglasplatten im nicht keramisierten Zustand in einem Zusatz-Prozess vor der eigentlichen Keramisierung gebogen.

Um eine solche abgewinkelte Glaskeramik zu fertigen, wird üblicherweise eine Grünglasplatte mit den benötigten Außenabmessungen bereitgestellt. Diese Grünglasplatte wird auf eine Temperatur zwischen 350°C ° - 750° C vorgewärmt und auf einem Vakuumtisch in einer Biegeanlage positioniert. Anschließend wird die Biegezone mittels gasbetriebenen Linearbrennern lokal erwärmt, auf eine Temperatur, bei der die Grünglasplatte eine plastische Verformung in der Biegezone ermöglicht. Dann erfolgt der Biegevorgang, wobei der freie Schenkel der Grünglasplatte auf den gewünschten Winkel abgebogen wird. Im Anschluss wird der Biegebereich auf eine Temperatur abgekühlt, bei der der Biegebereich erstarrt, so dass keine plastische Verformung mehr möglich ist. Der entstandene Formkörper wird daraufhin bei einer Temperatur im Bereich zwischen 650°C - 750°C für < 500 Sekunden entspannt. Abschließend erfolgt ein Abkühlschritt bei dem der gebogene Grünglaskörper auf Raumtemperatur abgekühlt wird.

Die gebogene Grünglasplatte kann dann einem üblichen Keramisierungsverfahren unterzogen werden.

Aus der WO 2005/042420 ist ein Biegeverfahren bekannt, bei dem ein oszillierender Gas-Linienbrenner eine Glasplatte bis zum Erweichungspunkt des Glases erhitzt. Anschließend wird die Glasplatte entlang einer Biegekante verformt und dann gekühlt.

In der DE 10 2009 012 018 A1 ist ein Verfahren beschrieben, mit dem sich abgewinkelte Glaskeramikscheiben herstellen lassen, die einen Biegeradius im Bereich zwischen 30 mm bis 200 mm aufweisen können. Dabei wird eine Grünglasplatte in einem Umformwerkzeug zwangsgesteuert umgeformt. Der Umformvorgang wird dabei in den Keramisierungsprozess eingebunden, sodass eine zeitliche Optimierung der Fertigung möglich wird. Die für die Keramisierung benötigte Aufheizung der Glasplatte im Grünglaszustand wird dabei ausgenutzt, um ab Erreichen eines ausreichenden Viskositätszustandes der Glasplatte diese umzuformen.

Die DE 10 2018 102 932 A1 beschreibt ein Verfahren zum Umformen einer im Grünglaszustand befindlichen Glasplatte. Mittels eines gesteuerten Erwärmungsprozesses wird ein ausreichend breiter, streifenförmiger Umformbereich erwärmt. Anschließend wird unter Zuhilfenahme eines Umformwerkzeugs die Verformung der Glasplatte durchgeführt. Dabei werden zwei Schenkel gegeneinander abgebogen, die über eine Abwinklung miteinander verbunden sind. Die Abwinklung ist dabei so gestaltet, dass sich ein Radienübergang zwischen den Schenkeln ergibt.

WO 2014 115 432 A1 beschreibt ein Verfahren zum Umformen einer Glaskeramikplatte. Die Glaskeramikplatte wird dabei lokal erhitzt und um einen bestimmten Winkel gebogen.

Mit all diesen Verfahren können plattenförmige Glasplatten gefertigt werden, bei denen eine einachsig gebogene Krümmung zwischen zwei flächenförmigen Schenkeln entsteht. Die dabei gebildete Abwinklung zwischen den beiden flächenförmigen Schenkeln bildet im Bereich der Bauteilaußenseite einen konvexen Biegebereich.

Aufgabe der Erfindung ist es ein Glaskeramikbauteil bereitzustellen, welches sich durch eine bessere Optik und Bauteilfestigkeit auszeichnet.

Die Aufgabe der Erfindung wird dadurch gelöst, dass die maximale Erstreckung einer Erhebung an den längsseitigen Endbereichen des Biegeabschnitts in Radialrichtung des konvexen Biegebereichs, bezogen auf den Scheitelpunkt des Außenbiegeradius im Abstand von 15 mm von dem jeweils zugeordneten längsseitigen Ende größer als 0 mm und kleiner ist als 0,7mm.

Im Fertigungsprozess treten Erhebungen zwangsläufig auf und lassen sich nicht vermeiden Diese Erhebungen werden meist auch als "wulstförmige Erhebungen" bezeichnet. Die Erfinder haben nun erkannt, dass dann, wenn die Erhebungen sich in radialer Richtung kleiner als 0,7 mm, besonders bevorzugt kleiner als 0,5 mm erstrecken, diese kaum noch optisch wahrnehmbar sind, wodurch das optische Erscheinungsbild entscheidend verbessert wird.

Darüber hinaus lassen sich diese Glaskeramikbauteile auch einfacher in Rahmenkonstruktionen einbauen, da hier die in der Höhe reduzierten Erhebungen kaum die Einbausituation beeinträchtigen.

Ein entscheidender Vorteil ist darüber hinaus die Erhöhung der Bruchfestigkeit und der Verformbarkeit der Glaskeramikbauteile gegenüber den bekannten Glaskeramikscheiben. Es hat sich gezeigt, dass bei einem Biegeversuch, bei dem die beiden Schenkel des Glaskeramikbauteils gegeneinander verbogen werden, ein höherer elastischer Verformungsgrad möglich ist, als bei den aus dem Stand der Technik bekannten Bauteilen. Dies ist ein entscheidender Vorteil, wenn die erfindungsgemäßen Glaskeramikbauteile im Heißbereich, beispielsweise bei Ofentüren, Verwendung finden. Dabei sind die Glaskeramikbauteile üblicherweise in einen Rahmen eingebaut. Wenn sich der Rahmen aufgrund von Temperaturveränderungen während des Ofenbetriebs ausdehnt oder zusammenzieht, so kann das Glaskeramikbauteil aufgrund seiner geringen thermischen Ausdehnung diese Verformung nicht nachvollziehen. Dadurch, dass nun aber die beiden Schenkel mit höherem Verformungsgrad gegeneinander gebogen werden können, lassen sich solche Temperaturwechselspiele problemlos ausgleichen.

Versuche der Erfinder haben eine signifikante Steigerung der Bruchfestigkeit ergeben. Dabei wurden jeweils 10 Stück von nach dem Stand der Technik gebogenen und keramisierten Glaskeramikbauteilen und von erfindungsgemäßen Glaskeramikbauteilen mit gleicher Bauteildimensionierung vermessen. In beiden Fällen wiesen die Glaskeramikbauteile auf der vom Biegewinkel eingeschlossenen Seite eine Dekorierung im Randbereich auf (umlaufender rahmenartiger Bereich, der mit einer Emaillefarbe bedruckt war und einen Dekorrahmen bildete).

Die Bauteile gemäß dem Stand der Technik wiesen eine durchschnittliche Bruchkraft von 150 N auf und brachen bei einer Verformung um eine Wegstrecke von 3,3 mm.

Die erfindungsgemäßen Bauteile wiesen eine durchschnittliche Bruchkraft von 185 N auf und brachen bei einer Verformung um eine Wegstrecke von 4,2 mm.

Das Messverfahren war wie folgt gestaltet:
Der lange Schenkel des getesteten Glaskeramikbauteils wies eine Länge von 358 mm auf. Der kurze Schenkel des Glaskeramikbauteils besaß eine Länge von 200 mm. Die Höhe des Glaskeramikbauteils in Richtung der Biegeachse betrug 254 mm. Die Dicke des Glaskeramikbauteils betrug 4 mm. Der Außen-Biegeradius betrug 9,5 mm und es war ein Biegewinkel von 90° gewählt. Die Breite des Dekorrahmens betrug 2 cm.

Als Messgerät wurde das Gerät TIRAtest 28150 der Firma TIRA GmbH eingesetzt.

Das Glaskeramikbauteil wurde an den beiden Seiten des langen Schenkels, die senkrecht zur Biegeachse stehen durch Klemmen fixiert, sodass der lange Schenkel vertikal angeordnet und der kurze Schenkel horizontal nach vorne ausgerichtet war.

Der kurze Schenkel wurde an allen drei Seiten, bis auf den Bereich in einem Abstand von 5 mm von der Abwinklung in die Nut eines U-förmig montierten Aluminiumprofils eingesteckt. Auf der Oberseite des U-förmig montierten Aluprofils war ein zusätzliches Profil parallel zur Biegeachse angeordnet, das zur Kraftaufnahme des Messgeräts dient (Strebe für die Kraftübertragung).

Durch diese Konstruktion der Aluprofile mit zusätzlicher Strebe für die Kraftübertragung war sichergestellt, dass die Kraft gleichmäßig auf die gesamte Kantenfläche des kurzen Schenkels verteilt wurde. Die Strebe war so angeordnet, dass die Kraft mit einem Abstand von 162,5 mm zur inneren Oberfläche des langen Schenkels auf den kurzen Schenkel einwirkte. Durch die Krafteinwirkung wurde der kurze Schenkel nach unten gebogen, wobei die Abwinklung aufgebogen wurde. Es wurde aufgezeichnet, bei welcher Wegstrecke und bei welcher Kraft das Glaskeramikbauteil brach.

Auch die Impulsbelastbarkeit, wie sie beispielsweise beim Zuschlagen einer Ofentür mit einem solchen Glaskeramikbauteil entsteht, hat sich überraschenderweise entscheidend verbessert.

Auch hier haben die Erfinder Versuche durchgeführt, wobei mehrere Proben von Glaskeramikbauteilen gemäß dem Stand der Technik und gemäß der Erfindung getestet wurden. Die Proben nach dem Stand der Technik wiesen eine durchschnittliche Bruchenergie von 8,6 J und die erfindungsgemäßen Glaskeramikbauteile von durchschnittlich 15,1 J auf.

Das Messverfahren war wie folgt gestaltet:
Der lange Schenkel der getesteten Glaskeramikbauteile wies eine Länge von 659 mm auf. Der kurze Schenkel des Glaskeramikbauteils besaß eine Länge von 439 mm. Die Höhe des Glaskeramikbauteils in Richtung der Biegeachse betrug 487 mm. Die Dicke des Glaskeramikbauteils betrug 4 mm. Der Außen-Biegeradius betrug 9,5 mm und es war ein Biegewinkel von 90° gewählt. Die Breite des Dekorrahmens betrug 4 cm.

Die getesteten Bauteile wurden in die Tür eines handelsüblichen Kaminofens vom Typ Varia 2 Rh der Firma Spartherm eingebaut.

Am Griff der Tür wurde über Umlenkrollen ein Gewicht befestigt, das beim Öffnen der Tür angehoben wurde. Je weiter die Tür geöffnet wurde, desto höher wurde das Gewicht gehoben. Beim Loslassen der Tür fiel das Gewicht wieder herunter und zog dadurch die Tür zu. Aus der Masse des Gewichts und der Fallhöhe wurde die Energie berechnet, mit der die Tür geschlossen wurde.

Die Tür wurde zunächst so geöffnet, dass das Gewicht auf eine Höhe von 10 cm angehoben wurde. Dann wurde der Griff losgelassen, sodass sich die Tür schloss. Anschließend wurde in weiteren Versuchen schrittweise die Tür jeweils so viel weiter geöffnet, dass das Gewicht jeweils 10 cm höher gehoben wurde, als im Schritt zuvor. Dies wurde wiederholt, bis die Scheibe brach. Die Energie bei dem Schritt, bei dem das Glaskeramikbauteil brach, entsprach der Bruchenergie.

Es wurde ein 2,2 kg schweres Gewicht verwendet. Daraus ergaben sich, je nach Fallhöhe des Gewichts, Energien zwischen ca. 2 J und 26 J als Messbereich.

Im Rahmen der Erfindung kann das Glaskeramikbauteil eine einzige Abwinklung zwischen zwei flächenförmigen Schenkeln bilden. Denkbar ist es jedoch auch, dass das Glaskeramikbauteil wenigstens zwei Abwinklungen aufweist, die sich jeweils zwischen flächenförmigen Schenkeln erstrecken, wobei vorzugsweise alle Abwinklungen entsprechend einem der Ansprüche ausgestaltet sind.

Gemäß einer bevorzugten Erfindungsvariante kann es vorgesehen sein, dass der Außen-Biegeradius in der Mitte der Bauteilhöhe im Bereich zwischen x mm bis kleiner 15 mm beträgt, wobei x dem Maß der Dicke des Glaskeramikbauteils im Bereich eines der beiden Schenkel entspricht.

Gemäß einer bevorzugten Erfindungsvariante kann es vorgesehen sein, dass die Schenkel jeweils eine Schenkelhöhe aufweisen, dass diese Schenkelhöhen jeweils parallel zu der sich längs des Biegeabschnitts und entlang der Scheitellinie des Außen-Biegeradius verlaufenden Bauteilhöhe und im seitlichen Abstand von 30 mm, gemessen senkrecht zur Bauteilhöhe verlaufen, und dass die Differenz:
Schenkelhöhe des ersten Schenkels minus Bauteilhöhe
und/oder die Differenz:
   Schenkelhöhe des zweiten Schenkels minus Bauteilhöhe
   größer oder gleich 0 und kleiner ist als 0,8 mm, vorzugsweise kleiner ist als 0,6 mm, besonders bevorzugt kleiner ist als 0,5 mm.

Ein solches Glaskeramikbauteil ist besonders maßhaltig und lässt sich einfach und optisch ansprechend in einen Trägerrahmen, wie er bei einer Ofentür typisch ist, einbauen.

Der Höheneinfall im Anschlussbereich an die Abwinklung ist derart gering, dass er optisch kaum noch wahrnehmbar ist. In Zusammenspiel mit Rahmenkonstruktionen lassen sich damit Bauweisen verwirklichen, bei denen im Randbereich des Glaskeramikbauteils durchgehende Schattenfugen gebildet werden, wobei der geringe Höheneinfall eine geradlinige Schattenfugen-Optik kaum beeinträchtigt.

Bei Maßdifferenzen, die kleiner als 0,8 mm gewählt sind, können insbesondere großformatige Ofentüren ansprechend gestaltet werden. Maßdifferenzen kleiner als 0,6 mm, besonders bevorzugt kleiner als 0,5 mm können für anspruchsvolle architektonische Lösungen Verwendung finden.

Gemäß der Erfindung kann es vorgesehen sein, dass die Dicke des Glaskeramikbauteils zumindest im Bereich eines der beiden Schenkel im Bereich zwischen 2,7 mm und ≤ 6,3 mm, bevorzugt im Bereich zwischen ≥ 3,7 mm und ≤ 5,3 mm liegt.

Eine bevorzugte Erfindungsvariante ist dergestalt, dass sich ein linear verlaufender Abschnitt des konvexen Biegebereichs in Richtung der Bauteilhöhe und durch den Scheitelpunkt des Außenbiegeradius in der Mitte der Bauteilhöhe erstreckt, dass der linear verlaufende Abschnitt in den beiden längsseitigen Endbereichen jeweils in einen ansteigenden Rampenabschnitt der Erhebung übergeht, dass sich an den Rampenabschnitt eine konvex gewölbte, insbesondere teilzylindrische Abflachung anschließt, die die Erhebung radial außen begrenzt.

Mit der Abflachung kann die Radialerstreckung der Erhebung weiter reduziert werden. Zudem hat diese Abflachung den besonderen Vorteil, dass der radial außenliegende kantige Vorsprung, wie er bei wulstförmigen Erhebungen typisch ist, gebrochen wird. Damit wird das Glaskeramikbauteil deutlich weniger anfällig gegenüber mechanischen Belastungen, die auf die Erhebung einwirken. Solche Belastungen sind insbesondere dann zu erwarten, wenn ein Glaskeramikbauteil passgenau in einen Rahmen eingebaut wird.

In Weiterbildung der Erfindung kann es dabei auch vorgesehen sein, dass die von der Abflachung gebildete konvex gewölbte, insbesondere teilzylindrische Fläche eine Erstreckung in Richtung der Bauteilhöhe im Bereich zwischen ≥ 0,1 mm und ≤ 4 mm hat und/oder die bogenförmige Erstreckung dieser konvex gewölbten, insbesondere teilzylindrischen Fläche in Richtung quer zu der Bauteilhöhe im Bereich zwischen ≥ 1 mm und ≤ 15 mm beträgt.

Es hat sich gezeigt, dass eine solche Abflachung besonders wirksam ist, wenn ein Glaskeramikbauteil Verwendung findet, welches passgenau in eine Rahmenkonstruktion einer Ofentür eingebaut wird.

Wenn dabei zudem vorgesehen ist, dass die von der Abflachung gebildete Fläche sich mit einer Abweichung von ±10° parallel zu dem linear verlaufenden Abschnitt erstreckt, dann kann ein Rahmenteil einer Rahmenkonstruktion unter Vermittlung eines elastischen Zwischenelements direkt auf der Abflachung aufstehen und sich dort abstützen. Dabei ist die Bruchanfälligkeit gegenüber bekannten Glaskeramikbauteilen dann deutlich reduziert.

Eine mögliche Erfindungsvariante ist derart, dass die Schenkel jeweils eine Schenkelhöhe aufweisen, dass diese Schenkelhöhen jeweils parallel zu der sich längs des Biegeabschnitts und entlang der Scheitellinie des Außen-Biegeradius verlaufenden Bauteilhöhe und im seitlichen Abstand von 30 mm zu der Scheitellinie, gemessen senkrecht zur Bauteilhöhe verlaufen, und dass die Schenkelhöhen im Bereich zwischen 150 mm bis 1500 mm, vorzugsweise im Bereich zwischen 200 mm bis 1000 mm oder besonders bevorzugt im Bereich zwischen 225 mm bis 850 mm gewählt ist,

Die Erfindung betrifft auch ein Verfahren zur Herstellung eines Glaskeramikbauteils, wobei eine im Grünglaszustand befindliche Glasplatte von einer Kante bis zur gegenüberliegenden Kante der Glasplatte mittels einer Heizeinrichtung erwärmt wird, bis eine erwärmte Zone entsteht, deren Temperaturniveau ausreichend ist, um die Glasplatte zu verformen, wobei dann die Glasplatte unter Einwirkung eines Umformwerkzeuges derart verformt wird, dass eine einachsig gebogene Krümmung in der erwärmten Zone entsteht, derart, dass eine Abwinklung mit einem Biegeabschnitt gebildet ist, an den sich beidseitig zwei flächenförmige Glasschenkel anschließen, wobei der Biegeabschnitt im Bereich der Bauteilaußenseite einen konvexen Biegebereich bildet, wobei der konvexe Biegebereich an seinen beiden längsseitigen Endbereichen im Bereich der gegenüberliegenden Kanten Erhebungen aufweist, die radial nach außen gegenüber dem übrigen Bereich des konvexen Biegebereichs vorstehen, wobei dann die umgeformte Glasplatte abgekühlt wird, bis sie ein Temperaturniveau erreicht, bei dem eine plastische Verformung in der erwärmten Zone nicht mehr möglich ist, und wobei anschließend die umgeformte Glasplatte in eine Keramisierungsform eingestellt und keramisiert wird.

Aufgabe der Erfindung ist es ein Verfahren zur Fertigung eines Glaskeramikbauteils bereitzustellen, welches sich durch eine bessere Optik und Bauteilfestigkeit auszeichnet.

Diese Aufgabe wird mit den Merkmalen des Anspruchs 9 gelöst.

Um ein erfindungsgemäßes Glaskeramikbauteil zu fertigen, bzw. zur Anwendung in einem erfindungsgemäßen Verfahren, kann beispielsweise eine Grünglasplatte vom Typ LAS, also Lithium-Aluminium-Silikat, verwendet werden, die folgende Zusammensetzung aufweist:

| Gew.-% | Bestandteil |
|---|---|
| 58 - 74 | SiO₂ |
| 15 - 28 | Al₂O₃ |
| 2 - 5,5 | Li₂O |
| 0-6 | CaO + SrO + BaO |
| 0-6 | TiO₂ |
| 0-5 | ZrO₂ |
| 0-5 | ZnO |
| 0 - 3 | Sb₂O₃ |
| 0 - 3 | MgO |
| 0 - 3 | SnO₂ |
| 0 - 9 | P₂O₅ |
| 0 - 2 | As₂O₃ |
| 0 - 2 | Na₂O |
| 0 - 2 | K₂O |
| 0 - 2 | färbende Oxide |
| 0 - 3 | B₂O₃ |
| 0 - 1 | F |

Erfindungsgemäß ist es vorgesehen, dass die Glasschenkel mit ihren Schenkel-Außenseiten an Trägerflächen von Trägern der Keramisierungsform abgestützt sind, dass die umgeformte Glasplatte mit ihren Erhebungen auf einem gemuldeten Abschnitt der Keramisierungsform im Bereich zwischen den Trägerflächen unter Einwirkung der Gewichtskraft der umgeformten Glasplatte aufsteht, und dass dann die umgeformte Glasplatte mit der Keramisierungsform in einen Keramisierungsofen verbracht und die umgeformte Glasplatte darin zu einem Glaskeramikbauteil keramisiert wird.

Hierbei wird die Gewichtskraft der umgeformten Glasplatte ausgenutzt, um die während des Umformvorganges entstandenen Erhebungen in radialer Richtung in den konvexen Biegebereich zurückzudrücken.

Wenn die Glasplatte mit der Keramisierungsform in den Keramisierungsofen eingebracht wird und anschließend der Keramisierungsvorgang durchgeführt wird, so wird die Glasplatte im Grünglaszustand derart erwärmt, dass das Glasmaterial erweicht. Die Gewichtskraft der Glasplatte steht nun auf den Erhebungen auf, die mit der Glasplatte ebenfalls erweicht werden. Aufgrund des entstehenden zähflüssigen Zustands lassen sich die Erhebungen dann zurückdrücken. Dies geschieht während des Keramisierungsprozesses, kurz vor der Kristallbildung, wenn sich die Platte auf einem für die Umformung ausreichend niedrigen Viskositätsniveau befindet. Hierdurch wird auf einfache Weise eine effiziente Verfahrensführung möglich.

Es hat sich gezeigt, dass bei diesem Verfahren die Erhebungen insbesondere dann effektiv zurückgedrückt werden können, wenn vorgesehen ist, dass der gemuldete Abschnitt der Keramisierungsform einen teilzylindrischen Abschnitt aufweist, dessen Längserstreckung in Achsrichtung der einachsigen Krümmung der umgeformten Glasplatte verläuft, und dass der Radius des teilzylindrischen Abschnitts mit einer Abweichung von +/- 1 mm dem mittleren Radius des Biegeabschnitts entspricht.

Die Erfinder haben erkannt, dass es besonders vorteilhaft ist, wenn bereits der Umformvorgang der Glasplatte so gestaltet ist, dass sich eine möglichst kleine Erhebung ergibt. Gemäß einer Erfindungsvariante ist es daher vorgesehen, dass die im Grünglaszustand befindliche Glasplatte zur Bildung der erwärmten Zone mittels der Heizeinrichtung, aufweisend einen Linien-Gasbrenner, erwärmt wird, dass dann, wenn die Glasplatte ein für die Verformung ausreichendes Temperaturniveau erreicht hat, der Linien-Gasbrenner abgestellt und anschließend die erwärmte Zone, beispielsweise mittels Druckluft, auf ein Temperaturniveau leicht gekühlt wird, welches eine plastische Verformung noch zulässt, , und dass anschließend mittels eines Umformwerkzeuges die plastische Verformung der Glasplatte zwangsgeführt derart durchgeführt wird, dass die einachsig gebogene Krümmung entsteht.

Die Kühlung der erwärmten Zone bewirkt eine Homogenisierung der Temperaturunterschiede zwischen Biegelinie und Biegekante. Dabei darf die Kühlung nur so weit vorgenommen werden, dass eine anschließende Umformung noch möglich ist.

Durch das Aufheizen mittels Gasflamme (oder CO₂-Laser) wird hauptsächlich die Oberfläche erhitzt und durch Wärmeleitung wandert die Wärme langsam in die Plattenmitte. Es kommt also zu einer Überhitzung der Oberfläche. Somit entsteht eine höhere Temperatur an der Oberfläche als zum Biegen notwendig wäre, während in Plattenmitte (bezogen auf die Glasdicke) die Temperatur noch nicht zum Biegen ausreicht. Durch das Kühlen soll also der Temperaturunterschied zwischen Oberfläche und Plattenmitte homogenisiert werden, sowie die Biegekante, die beim Aufheizen auf Grund des zusätzlichen Energieeintrags über die Schliffkante überhitzt, stärker gekühlt werden, um auch hier eine Vergleichmäßigung der Temperatur über die Biegelinie zu erreichen.

Bei dieser Verfahrensführung macht man sich also insbesondere die Erkenntnis zunutze, dass mit den Linien-Gasbrennern keine exakt gleichförmige Erwärmung der erwärmten Zone vorgenommen werden kann. Insbesondere in den Kantenbereichen der erwärmten Zone umspült die Flamme des Gasbrenners den Kantenbereich der Glasplatte. Hierdurch wird hier mehr Energie in die Glasplatte eingetragen als in den übrigen Plattenbereichen. Die Folge hiervon ist, dass in den Kantenbereichen eine deutlich niedrigere Viskosität vorliegt. Dies unterstützt die Wulstbildung in unerwünschter Weise. Wenn nun mit der vorgeschlagenen Kühlung, insbesondere Druckluft-Kühlung, eine Vergleichmäßigung des Temperaturniveaus in der Biegezone vorgenommen wird, so wirkt sich dies positiv auf die Erhebungen derart aus, dass diese sich weniger weit radial nach außen erstrecken, als bei gängigen Biegeverfahren.

Besonders bevorzugt kann es dabei vorgesehen sein, dass nachdem der Linien-Gasbrenner abgestellt wurde, die Brennerdüsen des Linien-Gasbrenners mittels Druckluft gespült werden und diese Druckluft verwendet wird, um die erwärmte Zone zu kühlen. Hierdurch ergibt sich ein geringer Anlagenaufwand, da die Brennerdüsen auch zum Zwecke der Kühlung verwendet werden.

Hierbei kann es insbesondere auch vorgesehen sein, dass die Druckluft verwendet wird, um die Flammen der an den einzelnen Brennerdüsen gebildeten Flammen auszulöschen.

Allgemein wird der oben beschriebene Effekt der ungleichmäßigen Erwärmung der Biegezone im Kantenbereich nach einer Erfindungsvariante dadurch positiv beeinflusst, wenn vorgesehen ist, dass die den gegenüberliegenden Kanten der Glasplatte zugeordneten Endbereiche der erwärmten Zone stärker gekühlt werden, als die übrigen Bereiche der erwärmten Zone oder dass diese Endbereiche ausschließlich gekühlt werden.

Eine weitere Erfindungsvariante kann dergestalt sein, dass im Bereich der gegenüberliegenden Kanten der Glasplatte druckluftbetriebene Kühleinrichtungen vorgesehen sind, dass die Kühleinrichtungen Druckluftdüsen aufweisen, die auf die Kanten der Glasplatte gerichtet sind, und dass über die Druckluftdüsen Druckluft während und/oder nach dem Betrieb des Linien-Gasbrenners auf die Kanten geblasen wird. Mit dieser Anordnung kann bewusst Einfluss auf die Kantenbereiche genommen werden. Werden die Druckluftdüsen während des Betriebs der Heizeinrichtung verwendet, so verhindern oder verringern die Druckluftdüsen den Effekt, dass die freien Kanten der erwärmten Zone mit der Heizeinrichtung umspült werden. Hierdurch bildet sich ein gleichmäßigeres Temperaturniveau über die gesamte Biegezone hinweg aus. Bei einer Verwendung der druckluftbetriebenen Druckluftdüsen nach dem Betrieb der Heizeinrichtung kann gezielt eine Kühlung der Kantenbereiche vorgenommen werden.

Eine weitere Erfindungsvariante kann dadurch gekennzeichnet sein, dass mittels der Heizeinrichtung ortsaufgelöst Energie in die erwärmte Zone derart eingebracht wird, dass Bereiche mit geringerem und weitere Bereiche mit demgegenüber höherem Energieeintrag gebildet werden. Auf diese Weise lässt sich gezielt eine möglichst gleichmäßige Temperatur über die gesamte Biegezone hinweg erreichen. Zu diesem Zweck kann vorzugsweise als Heizeinrichtung eine Laser-Lichtquelle verwendet werden. Mit dieser lässt sich eine sehr genaue Energieeinbringung in die Glasplatte steuern. Besonders bevorzugt ist es vorgesehen, dass als Heizeinrichtung (60) ein CO₂-Laser mit Galvanoscanner zur Strahlumlenkung verwendet ist. Mit einer solchen Einrichtung kann der Energieeintrag über die Biegelinien-Länge und -Breite genau variiert werden.

Es hat sich gezeigt, dass auch die gezielte Einstellung eines Temperaturunterschieds zwischen der Ober- und der Unterseite der Glasplatte im Biegekantenbereich eine positive Auswirkung auf die Wulstbildung hat. Es ist daher nach einer Erfindungsvariante vorgesehen, dass die Heizeinrichtung ein oberes Heizelement und ein unteres Heizelement aufweist, wobei das obere Heizelement im Bereich der Oberseite der Glasplatte und das untere Heizelement im Bereich der Unterseite der Glasplatte angeordnet ist, und dass das obere und das untere Heizelemente einen unterschiedlichen Energieeintrag in die Glasplatte bewirken.

Wenn nach einer Erfindungsvariante vorgesehen ist, dass während des Erwärmungsvorgangs die Glasplatte derart, vorzugsweise mit Greifern, unterstützt wird, dass eine Verformung in der erwärmten Zone zunächst verhindert ist und die Verformung erst stattfindet nachdem der Erwärmungsvorgang und optional ein anschließender Abkühlvorgang zur Homogenisierung der Temperaturverteilung entlang der Biegelinie abgeschlossen ist, dann wird ebenfalls positiv Einfluss auf die Wulstbildung genommen.

Die Erfindung wird im Folgenden anhand von in den Zeichnungen dargestellten Ausführungsbeispielen näher erläutert. Es zeigen:
Figur 1 in schematischer Darstellung einen Kaminofen,
Figur 2 in perspektivischer Ansicht von vorne eine Tür des Kaminofens gemäß Figur 1,
Figur 3 einen Schnitt längs des in Figur 4 angegebenen Schnittverlaufs,
Figuren 4 und 5 das Glaskeramikbauteil nach Figur 3 in verschiedenen Ansichten,
Figur 6 in perspektivischer Teildarstellung von vorne ein gebogenes Glaskeramikbauteil mit einer Dekorbeschichtung,
Figur 7 in perspektivischer Teildarstellung von vorne ein gebogenes Glaskeramikbauteil,
Figur 8 in perspektivischer Teildarstellung ein Glasbauteil im Grünglaszustand vor der Keramisierung,
Figur 9 in perspektivischer Teildarstellung ein Glaskeramikbauteil, gefertigt aus dem Glasbauteil gemäß Figur 8,
Figur 10 eine Umformvorrichtung in schematischer Darstellung,
Figur 11 in perspektivischer Frontansicht eine Keramisierungsform mit einem darin aufgenommenen Glasbauteil,
Figur 12 eine schematische Detaildarstellung der Anordnung gemäß Figur 11 in veränderter Perspektive,
Figuren 13 bis 15 verschiedene Messkurven von Glaskeramikbauteilen.

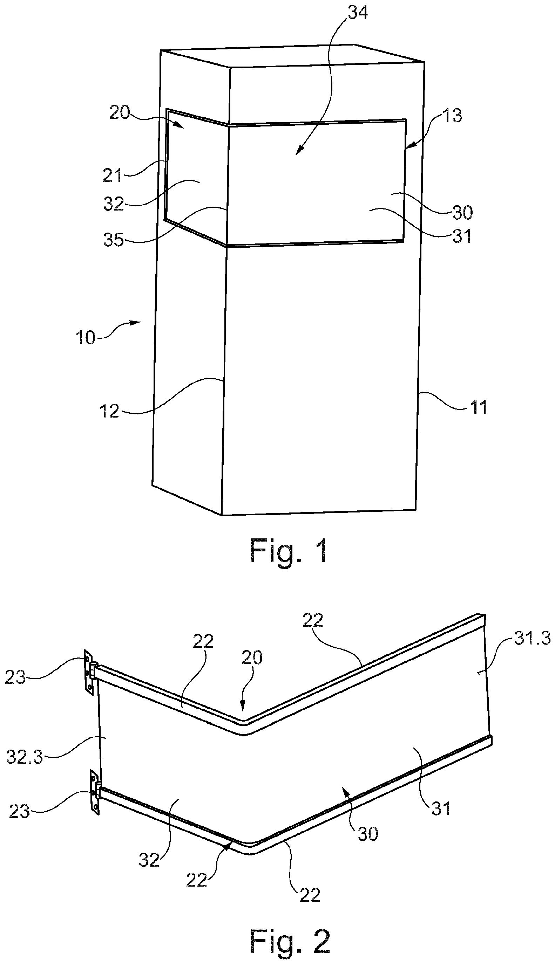

Figur 1 zeigt einen Kaminofen 10, wie er typischerweise in Wohngebäuden zum Einsatz kommt. Der Kaminofen 10 weist einen Korpus 11 mit einer Einbaunische 13 auf. In die Einbaunische 13 kann ein Heißaggregat 20, beispielsweise ein Ofeneinsatz eingebaut werden. Das Heißaggregat 20 weist eine Tür 21 auf. Diese Tür besitzt ein gebogenes Glaskeramikbauteil 30. Das Glaskeramikbauteil 30 ermöglicht die Einsichtnahme auf ein Feuer, welches im Kaminofen 10 abbrennt. Das Glaskeramikbauteil 30 besitzt zwei zueinander im Winkel stehende Schenkel 31, 32. Diese beiden Schenkel 31, 32 sind einteilig über eine Abwinklung im Bereich eines Biegeabschnittes 35 miteinander verbunden. Der Biegeabschnitt 35 setzt sich in einer Korpuskante 12 des Kaminofens 10 fort.

Figur 2 zeigt die Tür 21 gemäß Figur 1 in Einzelteildarstellung. Wie diese Zeichnung erkennen lässt, besitzt das Glaskeramikbauteil 30 die beiden im Winkel von 90° zueinander angeordneten Schenkel 31, 32. An den beiden gegenüberliegenden horizontalen Kanten des Glaskeramikbauteils 30 sind Türprofile 22 angebracht. Im vorliegenden Ausführungsbeispiel sind die beiden vertikalen Kanten des Glaskeramikbauteils 30, welche im Bereich der Schenkelenden 31.3, 32.3 angeordnet sind, nicht von Türprofilen 22 umfasst. Dies ist der besonderen Design Ausgestaltung des vorliegenden Beispiels geschuldet. Selbstverständlich können auch Türen 21 gestaltet sein, bei denen das Glaskeramikbauteil 30 umlaufend mit Türprofilen 22 eingefasst ist. Dabei bilden die Türprofile 22 üblicherweise einen Rahmen, in dem das Glaskeramikbauteil 30 stabil aufgenommen werden kann

Die Tür 21 besitzt Scharniere 23, welche eine vertikale Scharnierachse bilden. Die Scharniere 23 sind an den Türprofilen 22 festgemacht. Mit den Scharnieren 23 kann die Tür 21 derart mit dem Heißaggregat 20 verbunden werden, dass sie um eine vertikale Achse von der in der Figur 1 gezeigten geschlossenen Stellung in eine geöffnete Stellung verschwenkt werden kann.

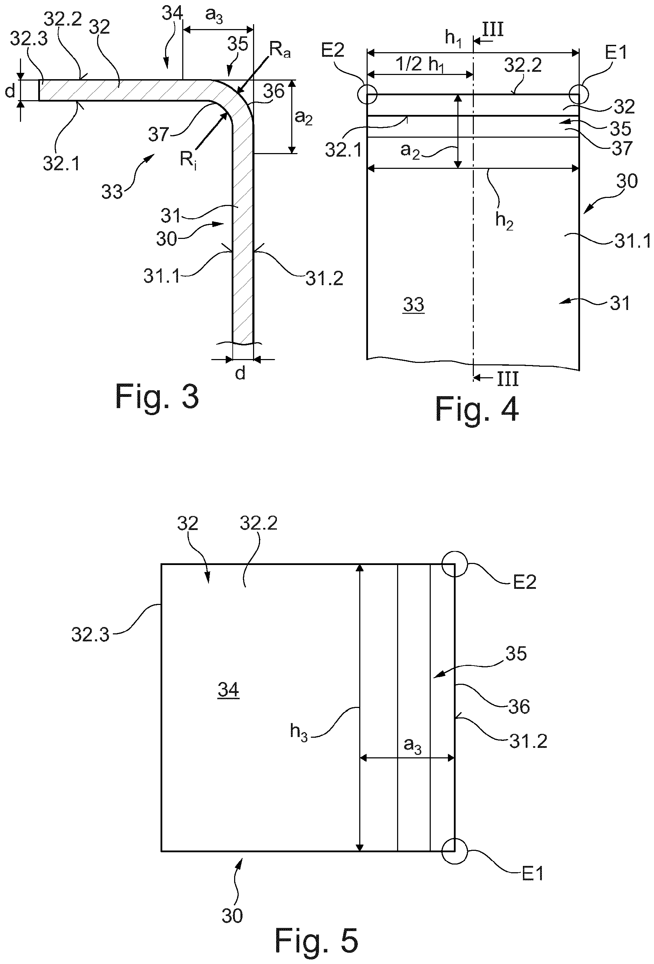

In den Figuren 3 bis 5 ist die Gestaltung des Glaskeramikbauteils 30 näher detailliert, wobei diese Darstellungen keine detailgetreue Wiedergabe des Glaskeramikbauteils 30 darstellt, sondern als schematische Darstellung zu verstehen sind. Das Glaskeramikbauteil 30 weist den ersten Schenkel 31 und den dazu im Winkel stehenden zweiten Schenkel 32 auf.

Im Rahmen der Erfindung sollen insbesondere sämtliche eingeschlossene Winkel zwischen den beiden Schenkeln 31 und 32 verstanden werden, die kleiner 150°, vorzugsweise kleiner 120°, besonders bevorzugt kleiner 100° sind.

Im Rahmen der Erfindung kann es vorgesehen sein, dass der minimale eingeschlossene Winkel zwischen den beiden Schenkeln 31 und 32 zumindest 45°, vorzugsweise wenigstens 60°, besonders bevorzugt wenigstens 80° aufweist.

Bei einem eingeschlossenen Winkel von 60° ist im Rahmen der Erfindung insbesondere eine Variante denkbar, bei der das Glaskeramikbauteil zwei gleich lange Schenkel 31, 32 (mit einer Abweichung von 5 %) aufweist. Dann bilden die beiden Schenkel 31, 32 zwei von drei Seiten eines gleichseitigen Dreiecks.

Der erste Schenkel 31 besitzt eine Schenkelinnenseite 31.1, die einer Bauteilinnenseite 33 zugewandt ist. Gegenüberliegend besitzt der erste Schenkel 31 eine Schenkelaußenseite 31.2. In gleicher Weise besitzt der zweite Schenkel 32 eine Schenkelinnenseite 32.1 und eine Schenkel-Außenseite 32.2. Zwischen den beiden Schenkel-Innenseiten 31.1, 32.1 ist der vorbeschriebene Winkel eingeschlossen. Die beiden Schenkel 31, 32 sind über die einteilig angeformte Abwinklung, welche einen Biegeabschnitt 35 bildet miteinander verbunden. Gegenüberliegend dem Biegeabschnitt 35 weisen die Schenkel 31, 32 jeweils ein Schenkelende 31.3, 32.3 auf. Diese Schenkelenden 31.3, 32.3 bilden das freie Ende des Glaskeramikbauteils 30 an dieser Stelle.

Der Biegeabschnitt 35 bildet im Bereich der Bauteilaußenseite 34 einen konvexen Biegebereich 36. Im Bereich der Bauteilinnenseite 33 ist ein konkaver Biegebereich 37 vorgesehen. Der konvexe Biegebereich 36 bildet einen Außenradius Ra der konkave Biegebereichs 37 bildet einen Innenradius Ri.

Das Glaskeramikbauteil 30 weist eine Dicke d auf, die vorzugsweise mindestens 2,7 mm und maximal 6,3 mm, besonders bevorzugt mindesten 3,7 mm und maximal 5,3 mm aufweist.

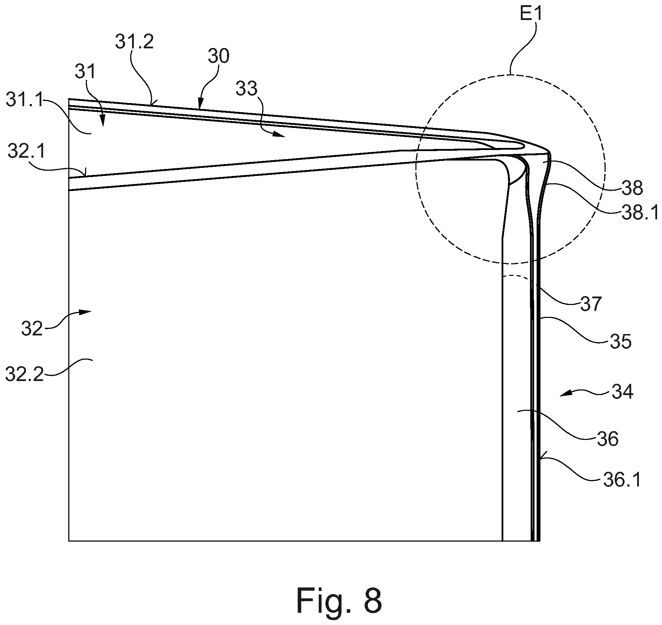

Während Figur 3 eine Seitenansicht des Glaskeramikbauteils 30 entlang des in Figur 4 mit III-III markierten Schnittverlaufs darstellt, zeigt Figur 4 eine Ansicht von links auf die Darstellung gemäß Figur 3. Figur 5 stellt eine Draufsicht von oben auf die Darstellung gemäß Figur 3 dar. Wie die Figuren 4 und 5 erkennen lassen, weist der Biegeabschnitt 35 an seinen beiden längsseitigen Endbereiche E1, E2 Erhebungen 38 (siehe Figur 8) auf. Diese Darstellungen lassen weiterhin erkennen, dass die Schenkel 31, 32 eine Schenkelhöhe h2, h3 aufweisen. Dabei werden die Schenkelhöhen h2 und h3 entlang einer Linie parallel zu der sich längs des Biegeabschnitts verlaufenden Bauteilhöhe h1 gemessen, wobei der Abstand a2, a3 der Linien h2, h3 zu der Linie h1 30 mm beträgt. Die Linie h1 stellt die Bauteilhöhe dar, die längs des Scheitels auf der Winkelhalbierenden des konvexen Biegebereichs 36 gemessen wird.

Gemäß der Erfindung beträgt die Differenz h2 - h1 bzw. h3 - h1 <0,8 mm, vorzugsweise <0,6 mm, besonders bevorzugt <0,5 mm.

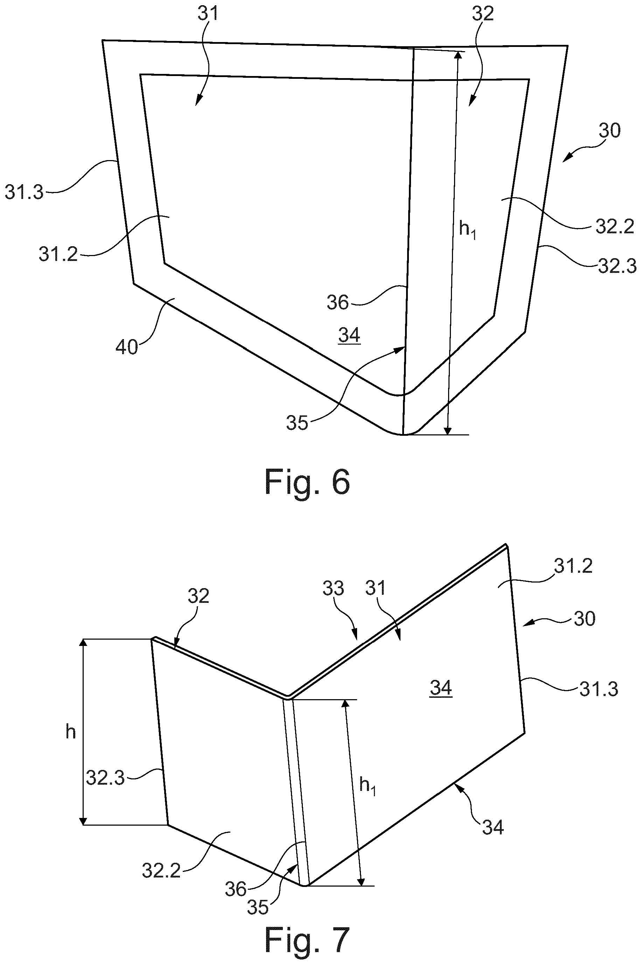

In Figur 6 ist ein Glaskeramikbauteil 30 gezeigt, welches im Wesentlichen gemäß der Bauweise des Glaskeramikbauteils 30 nach den Figuren 3 bis 5 gestaltet ist. Zusätzlich ist im Randbereich des Glaskeramikbauteils 30 eine umlaufende Beschichtung 40 vorgesehen. Die Beschichtung 40 ist auf die Bauteilinnenseite 33 aufgebracht und wird von einer keramischen Farbe gebildet, die während des Keramisierungsprozesses der Glaskeramik eingebrannt wird. Unter einer eingebrannten keramischen Farbe wird dabei eine Beschichtung verstanden, die ein Feststoffgemisch aus einem Glas als Dispersionsmedium und wenigstens einem Pigment als disperser Phase enthält.

In Figur 7 ist ein Glaskeramikbauteil 30 dargestellt, welches im Aufbau dem Glaskeramikbauteil 30 gemäß Figur 6 entspricht, jedoch nicht mit einer Beschichtung 40 versehen ist.

In Figur 8 ist in vergrößerter Detaildarstellung ein Glaskeramikbauteil 30, beispielsweise gemäß den Figuren 3 bis 7 gezeigt. Dabei wird der Endbereich E1 am Ende des Biegeabschnitts 35 vergrößert dargestellt. Wie diese Zeichnung erkennen lässt, ist in den Endbereichen E1, E2 des Biegeabschnitts 35 eine Erhebung 38 angeordnet. Diese Erhebung 38 steht in radialer Richtung über den übrigen Bereich des Biegeabschnitts 35 vor. Die Erhebungen 38 weist einen Rampenabschnitt 38.1 auf, der in Richtung zur freien Kante des konvexen Biegebereichs 36 kontinuierlich aufsteigt.

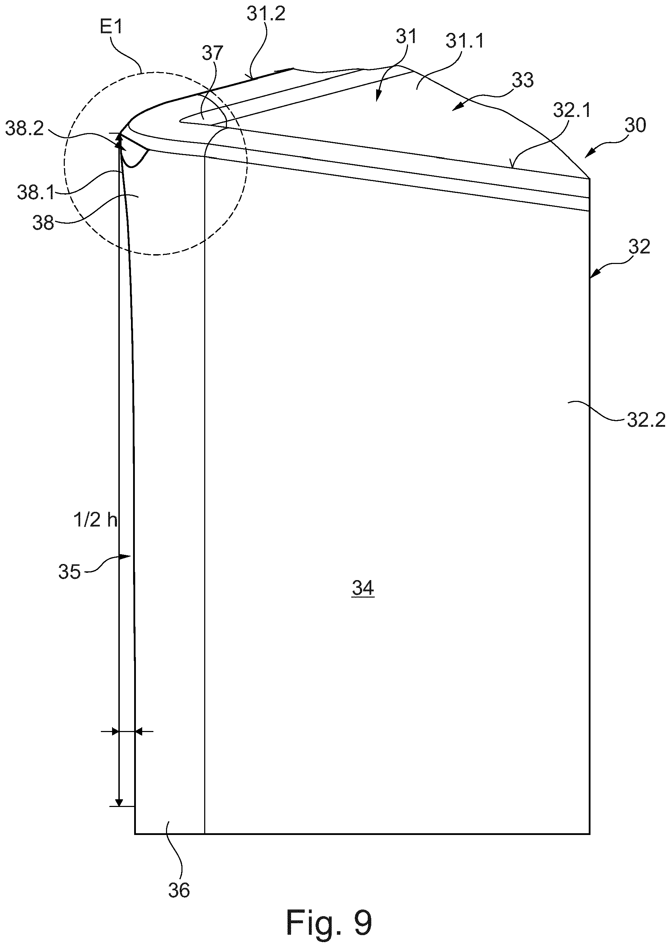

In Figur 9 ist ein weiteres Detail dieses Glaskeramikbauteils 30 gezeigt. Wie diese Darstellung erkennen lässt, weist die Erhebungen 38 im Anschluss an den Rampenabschnitt 38.1 eine teilzylindrische Abflachung 38.2 auf. Die zylindrische Abflachung 38.2 bildet eine Fläche mit einer Streckung in Richtung der Bauteilhöhe h1 im Bereich zwischen 0,1 mm und 4 mm. Quer zur Bauteilhöhe h1 hat diese Abflachung eine bogenförmige Flächenerstreckung im Bereich zwischen 1 und 15 mm Bogenmaß.

Zur Fertigung des in den vorstehenden Darstellungen gezeigten Glaskeramikbauteils wird eine Kombination aus einem vorteilhaften Umformverfahren und einem vorteilhaften Keramisierungs-Verfahren eingesetzt.

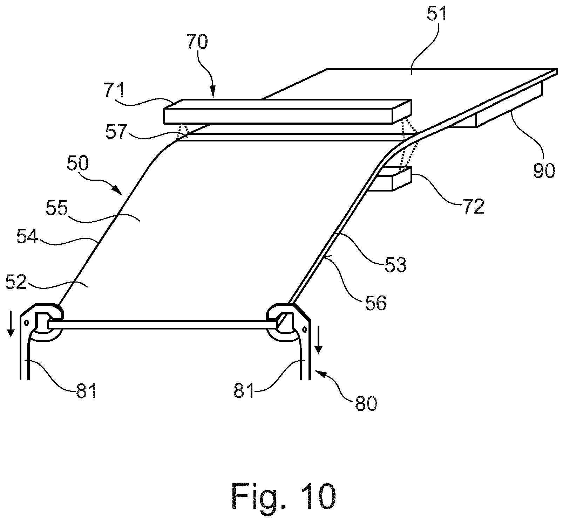

Unter Bezugnahme auf Figur 10 wird nachstehend das Umformverfahren nachstehend näher erläutert. Im vorliegenden Ausführungsbeispiel wird eine im Grünglaszustand befindlichen Glasplatte 50 mit einem Glasschenkel 51 auf eine ebene Auflagefläche 90 aufgelegt und hier fixiert, beispielsweise mittels Vakuumeinrichtungen. Gegenüberliegend der Auflagefläche 90 wird die Glasplatte 50 an einem zweiten Glasschenkel 52 mittels eines Umformwerkzeuges 80 gehalten. Im vorliegenden Fall besitzt das Umformwerkzeug 80 zwei Greifer 81, die an gegenüberliegenden Kanten 53, 54 der Glasplatte 50 angreifen.

Mittels einer oder mehrerer Heizeinrichtungen 70 kann nun ein sich von der einen Kante 53 der Glasplatte 50 bis zur gegenüberliegenden Kante 54 erstreckender streifenförmige Abschnitt erwärmt werden, bis dieser eine erwärmte Zone 57 bildet und erweicht.

Im vorliegenden Ausführungsbeispiel besitzt die Heizeinrichtung 70 ein oberes Heizelement 71, welches auf die Glasplattenoberseite 55 einwirkt und ein unteres Heizelement 72, welches auf die gegenüberliegende Glasplattenunterseite 56 einwirkt. Auf diese Weise ist ein schnelles und effektives Aufheizen möglich. Zudem besteht dann die Möglichkeit, dass ein unterschiedlich starker Energieeintrag auf die Glasplattenoberseite 55 und die Glasplattenunterseite 56 gestaltet werden kann, was sich vorteilhaft auf das Umformverfahren auswirkt.

Wenn die Glasplatte 50 soweit erwärmt ist, dass das Glas ausreichend erweicht ist, so wird die Glasplatte 50 im Bereich der erwärmten Zone 57 gebogen. Zu diesem Zweck wird die Glasplatte 50 im Bereich des Glasschenkels 52 mit den Greifern 81 gegenüber dem an der Auflagefläche 90 festgehaltenen Glasschenkel 51 bewegt. Auf diese Weise entsteht in der erwärmten Zone 57 eine einfach, bzw. einachsig gebogene Krümmung, die den Biegeabschnitt 35 bildet.

Mit dem vorstehend beschriebenen Verfahren kann beispielsweise eine Glasplatte mit einer Dicke von 4 mm unter Gestaltung eines Biegeabschnitts 35 erzeugt werden, bei dem die Glasschenkel 51, 52 im Winkel von 90° zueinanderstehen und wobei der Biegeradius des konvexen Biegebereichs 36 9,5 mm beträgt. Die Umformgeschwindigkeit wurde mit 5 Sekunden eingestellt.

Als Heizelemente 71, 72 können Linien-Gasbrenner zum Einsatz kommen. Diese Linien-Gasbrenner haben eine effektive Flächenleistung die mindestens 10 W/cm² beträgt. Die effektive Flächenleistung bezeichnet dabei die tatsächlich im Glas deponierte Wärmeenergie pro Zeiteinheit. Vorzugsweise liegt die gemittelte effektive Flächenleistung in einem Bereich von 20 W/cm² bis 1000 W/cm². Bei Gasbrennern liegt die effektive Leistung eher höher als bei der Verwendung eines Lasers, wie etwa eines CO₂-Lasers. Vorzugsweise werden aber mit den beiden genannten Heizquellen Leistungen im genannten Bereich von 20 W/cm² bis 1000 W/cm² eingestellt.

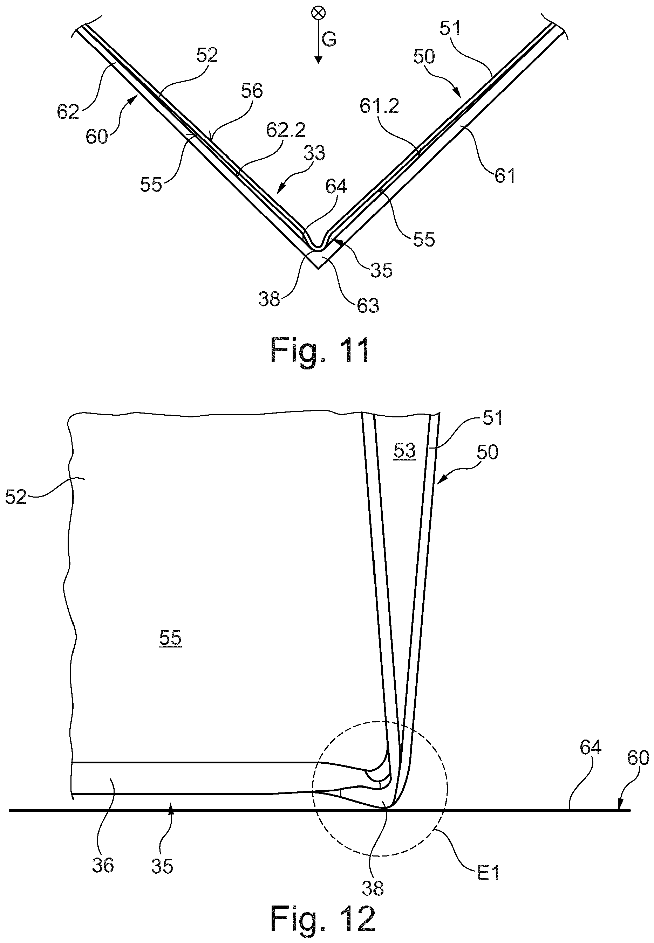

Nach der erfolgten Umformung der Glasplatte 50 wird diese keramisiert. Hierbei kommt ein ebenfalls erfindungsgemäßes Keramisierungsverfahren zum Einsatz, welches nachstehend unter Bezugnahme auf die Figuren 11 und 12 näher erläutert wird.

In Figur 11 ist schematisch eine Keramisierungsform 60 dargestellt. Diese Keramisierungsform 60 weist zwei Träger 61, 62 auf, die zueinander im Winkel von 90° stehen. In die Keramisierungsform 60 ist weiterhin ein Verbindungsabschnitt 63 eingebaut. Dieser Verbindungsabschnitt 63 bildet einen gemuldeten Abschnitt 64. Die Träger 62 weisen innenliegende Trägerflächen 61.2, 62.2 auf. Diese Trägerflächen 61.2, 62.2 gehen vorzugsweise kontinuierlich in den gemuldeten Abschnitt 64 über. Der Radius des gemuldeten Abschnitts 64 entspricht dem mittleren Biegeradius des konvexen Biegebereichs 36 der Glasplatte 50.

Während des Biegevorgangs entstehen an den längsseitigen Enden E1, E2 des Biegeabschnitts 35 die vorstehend bereits erläuterten Erhebungen 38, welche in radialer Richtung über den Scheitelpunkt des konvexen Biegebereichs 36 in der Bauteilmitte (1/2*h1) vorstehen. Der Überstand der Erhebungen 38 ist deutlich in Figur 12 zu erkennen.

Die Glasplatte 50 wird derart in die Keramisierungsform 60 eingestellt, dass die Glasschenkel 51, 52 gegenüber den Trägerflächen 61.2, 62.2, vorzugsweise flächig abgestützt sind. Zudem stehen die Erhebungen 38 auf dem gemuldeten Abschnitt 64 auf. Wie Figur 12 erkennen lässt, stehen damit die übrigen Bereiche des konvexen Biegebereichs 36 im Abstand über dem Boden des gemuldeten Abschnitts 64 der Keramisierungsform 60. Damit steht die Glasplatte 50 mit ihrer Gewichtskraft G im Wesentlichen auf den Erhebungen 38 an den längsseitigen Enden des Biegeabschnitt 35 auf.

Anschließend wird die Kombination der Keramisierungsform 60 mit der Glasplatte 50 in einen Keramisierungsofen eingebracht. Dort wird ein Keramisierungs-Programm in bekannter Art durchgeführt, bei dem die im Grünglaszustand befindliche Glasplatte 50 in das Glaskeramikbauteil 30 umgewandelt wird. Bei diesem Vorgang wird die Glasplatte 50 aufgeheizt und auf einen Temperaturzustand gebracht, bei dem sie erweicht. Während der Beheizung der Glasplatte 50 beginnt ab einem bestimmten Temperaturniveau die Keramisierung. Dabei wachsen an Kristallisationskeimen Kristalle auf. In dem kurzen Zeitfenster, bis die Kristallisationskeime eine gewisse Größe aufweisen kann die wulstförmige Erhebung 38 aufgrund der einwirkenden Gewichtskraft G der Glasplatte 50 zurückgedrückt werden, sodass sich deren Überstand reduziert. Haben die Kristallisationskeime eine gewisse kritische Größe erreicht, ist eine Verformung nicht mehr möglich. Der Vorteil des erfindungsgemäßen Verfahrens ist, dass innerhalb des kurzen Zeitfensters, alleine aufgrund der Gewichtskraft G der Glasplatte 50 eine entscheidende Reduzierung der Höhe der Erhebungen 38 erreicht werden kann. Dabei wird auch die oben erwähnte zylindrische Abflachung 38.2 gebildet, nämlich an dem Kontaktbereich der Erhebung 38 zu dem gemuldeten Abschnitt 64.

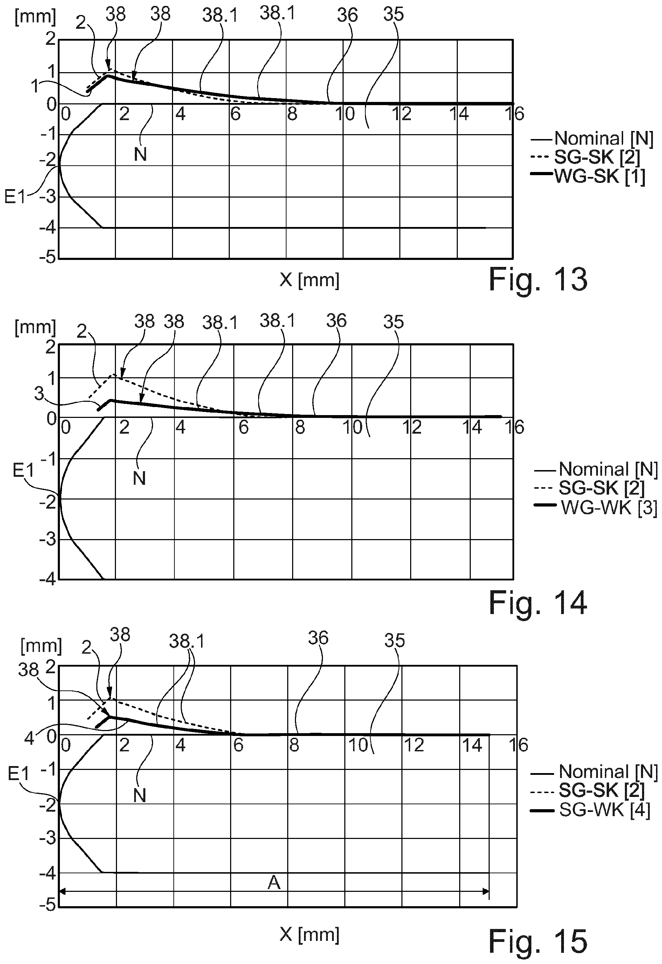

Zur weiteren Erläuterung der vorteilhaften Beeinflussung der Erhebungen 38 mit den erfindungsgemäßen Verfahren wird nachstehend Bezug auf die Figuren 13 bis 15 genommen.

In diesen Darstellungen ist jeweils eine Nominalkontur N eingezeichnet. Die Nominalkontur N stellt eine Linie dar, die im Bereich der Bauteilaußenseite 34 in Richtung der Längserstreckung des konvexen Biegebereichs 36, also in Richtung der Bauteilhöhe h1, verläuft. Diese Linie schneidet in einem Abstand von 15 mm, (gemessen in Richtung der Bauteilhöhe h1) vom jeweiligen längsseitigen Ende E1, E2 den Scheitelpunkt des Außen-Biegeradius (Ra) des konvexen Biegebereichs 36. Dieser Abstand ist in Figur 15 mit A markiert.

Dieser Nominalkontur N sind in jeder Darstellung zwei Kurven überlagert. Die Kurve 2, welche in jeder der drei Darstellungen eingezeichnet ist, stellt eine Meßkurve dar, die erzeugt wird, in dem ein Taster über die Scheitellinie des Außen-Biegeradius Ra geführt wird, wobei die Endbereiche E1, E2 vermessen werden. Im vorliegenden Meßprotokoll werden dementsprechend von der Außenkante, im Bereich der Erhebung 38 einwärts gemessen, die letzten 16 mm vermessen.

Die Kurve 2 repräsentiert ein Glaskeramikbauteil 30, welches nach einem Standardverfahren gemäß dem Stand der Technik gebogen (SG) und nach einem Standardverfahren (SK), also ohne Unterstützung des Wulstbereichs keramisiert wurde.

Wie diese Darstellung deutlich macht, erstreckt sich die Erhebung 38 über 1 mm radial über die Nominalkontur N. Es zeigt sich zudem, dass der Rampenabschnitt 38.1 dieser Erhebung 38 ungefähr bei 7 mm beginnt und einen relativ steilen Steigungswinkel aufweist.

Der Kurve 2 ist eine Kurve 1 gegenübergestellt. Diese Kurve 1 repräsentiert ein Glaskeramikbauteil 30, welches mit einem Umformverfahren erzeugt wurde, wie es in Bezug auf Figur 10 erläutert wurde (WG). Es wurde ein Standard-Keramisierungsverfahren (SK) eingesetzt. Wie die Darstellung veranschaulicht, kann gegenüber der Kurve 2 eine Wulsthöhe kleiner 0,8 mm erzeugt werden. Der Steigungswinkel des Rampenabschnitts 38.1 dieser Erhebung 38 ist deutlich flacher als der Steigungswinkel der Kurve 2. Zudem hat sich der Beginn des Rampenabschnitts 38 verschoben. Er beginnt nun bei ca. 9,5 mm.

In Figur 14 ist eine Kurve 3 eingezeichnet. Diese Kurve 3 repräsentiert ein Glaskeramikbauteil 30, welches mit einem Umformverfahren erzeugt wurde, wie es in Bezug auf Figur 10 erläutert wurde (WG). Zudem wurde ein Keramisierungsverfahren (WK) eingesetzt, wie es in Bezug auf die Figuren 11 und 12 erläutert wurde.

In dieser Zeichnung ist deutlich der vorteilhafte Effekt der beiden erfindungsgemäßen Verfahren auf die Gestaltung der wulstförmigen Erhebung 38 zu erkennen. Figur 14 macht deutlich, dass die wulstförmige Erhebung 38 nur noch wenig, insbesondere kleiner 0,5 mm vorsteht. Zudem ist die Steigung des Rampenabschnitts 38.1 deutlich abgeflacht. Der Rampenabschnitt beginnt bei ca. 9 mm.

In Figur 15 ist wieder die Kurve 2 aus den Figuren 13 und 14 eingezeichnet. Weiterhin ist in Figur 15 eine Kurve 4 eingezeichnet, die ein Glaskeramikbauteil 30 repräsentiert, bei dem ein Standard Biegeverfahren, (SG) wie es aus dem Stand der Technik bekannt ist, eingesetzt wurde. Für die Keramisierung wurde ein erfindungsgemäßes Keramisierungsverfahren (WK) verwendet, wie es in Bezug auf die Figuren 11 und 12 beschrieben ist. Die Zeichnung veranschaulicht deutlich den positiven Effekt des erfindungsgemäßen Keramisierungsverfahrens. Dementsprechend kann die Höhe der wulstförmigen Erhebung 38 deutlich reduziert werden. Auch die Steigung des Rampenabschnitts 38.1 ist deutlich verringert. Der Anfangspunkt des Rampenabschnitts 38.1 ist gegenüber dem gemäß Kurve 2 nicht verschoben.

Aus dem Vergleich der Kurven 1, 3 und 4 aus den Figuren 13 bis 15 wird weiterhin ersichtlich, dass durch die Kombination des Biegeverfahrens (WG) mit dem Keramisierungsverfahren (WK) eine stärkere Reduktion der Höhe der Erhebung erreicht werden kann, als aus den einzelnen Verfahrensschritten vorhersagbar gewesen wäre. Es liegt also ein besonders vorteilhafter synergistischer Effekt durch die Kombination dieser beiden Verfahrensschritte vor.

An dieser Stelle sei erwähnt, dass aufgrund des verwendeten Meßverfahrens die Abflachung 38.2 der wulstförmigen Erhebungen 38 in den Kurven 3 und 4 nicht exakt vermessen werden konnte.

## Patentansprüche

1. Glaskeramikbauteil (30), mit einer Abwinklung, die zwei flächenförmige Schenkel (31, 32) entlang eines in Richtung einer Bauteilhöhe (h1) verlaufenden Biegeabschnitts (35) winklig miteinander verbindet,
wobei die Abwinklung im Bereich einer Bauteilaußenseite (34) einen konvexen Biegebereich (36) aufweist, der einen Außen-Biegeradius (Ra) aufweist,
und wobei der Biegeabschnitt (35) an seinen beiden längsseitigen Endbereichen (E1, E2) Erhebungen (38) aufweist,
**dadurch gekennzeichnet,**
**dass** die maximale Erstreckung der Erhebungen (38) an den längsseitigen Endbereichen (E1, E2) in Radialrichtung des konvexen Biegebereichs (36), bezogen auf den Scheitelpunkt des Außenbiegeradius (Ra) im Abstand von 15 mm von dem jeweils zugeordneten längsseitigen Ende (E1, E2) größer als 0 mm und kleiner ist als 0,7 mm.

2. Glaskeramikbauteil nach Anspruch 1, **dadurch gekennzeichnet, dass** die maximale Erstreckung der Erhebungen (38) an den längsseitigen Endbereichen (E1, E2) in Radialrichtung des konvexen Biegebereichs (36), bezogen auf den Scheitelpunkt des Außenbiegeradius (Ra) im Abstand 15 mm von dem jeweils zugeordneten längsseitigen Ende (E1, E2) kleiner ist als 0,5 mm.

3. Glaskeramikbauteil nach Anspruch 1 oder 2, **dadurch gekennzeichnet, dass** der Außen-Biegeradius (Ra) in der Mitte der Bauteilhöhe (h1) im Bereich zwischen x mm bis kleiner 15 mm beträgt, wobei x mindestens dem Maß der Dicke des Glaskeramikbauteils im Bereich eines der beiden Schenkel entspricht.

4. Glaskeramikbauteil nach einem der Ansprüche 1 bis 3, **dadurch gekennzeichnet, dass** die Schenkel (31, 32) jeweils eine Schenkelhöhe (h2, h3) aufweisen, dass diese Schenkelhöhen (h2, h3) jeweils parallel zu der sich längs des Biegeabschnitts (35) und entlang der Scheitellinie des Außen-Biegeradius (Ra) verlaufenden Bauteilhöhe (h1) und im seitlichen Abstand von 30 mm, gemessen senkrecht zur Bauteilhöhe (h1) verlaufen, und dass die Differenz:
Schenkelhöhe (h2) des ersten Schenkels (31) minus Bauteilhöhe (h1)
und/oder die Differenz:
Schenkelhöhe (h3) des zweiten Schenkels (32) minus Bauteilhöhe (h1)
≥ 0 und < 0,8 mm ist, vorzugsweise kleiner ist als 0,6 mm, besonders bevorzugt kleiner ist als 0,5 mm.

5. Glaskeramikbauteil nach einem der Ansprüche 1 bis 4, **dadurch gekennzeichnet, dass** sich ein linear verlaufender Abschnitt (36.1) des konvexen Biegebereichs in Richtung der Bauteilhöhe (h1) und durch den Scheitelpunkt des Außenbiegeradius (Ra) in der Mitte der Bauteilhöhe (h1) erstreckt, dass der linear verlaufende Abschnitt (36.1) in den beiden längsseitigen Endbereichen (E1, E2) jeweils in einen ansteigenden Rampenabschnitt (38.1) der Erhebung (38) übergeht, dass sich an den Rampenabschnitt (38.1) eine konvex gewölbte, insbesondere teilzylindrische Abflachung (38.2) anschließt, die die Erhebung (38) radial außen begrenzt.

6. Glaskeramikbauteil nach Anspruch 5, **dadurch gekennzeichnet, dass** die von der Abflachung (38.2) gebildete konvex gewölbte, insbesondere teilzylindrische Fläche eine Erstreckung in Richtung der Bauteilhöhe (h1) im Bereich zwischen ≥ 0,1 mm und ≤ 4 mm hat und/oder die bogenförmige Erstreckung dieser konvex gewölbten, insbesondere teilzylindrischen Fläche in Richtung quer zu der Bauteilhöhe (h1) im Bereich zwischen ≥ 1 mm und ≤ 15 mm beträgt.

7. Glaskeramikbauteil nach Anspruch 5 oder 6, **dadurch gekennzeichnet, dass** die von der Abflachung (38.2) gebildete Fläche sich mit einer Abweichung von ±10° parallel zu dem linear verlaufenden Abschnitt (36.1) erstreckt.

8. Glaskeramikbauteil nach einem der Ansprüche 1 bis 7, **dadurch gekennzeichnet, dass** die senkrecht zur Scheitellinie verlaufende maximale Schenkellänge der Schenkel (31,32) im Bereich zwischen 200 mm bis 1000 mm gewählt ist, wobei die Schenkellänge des ersten Schenkels (31) der Schenkellänge des zweiten Schenkels (32) mit einer Abweichung von 5 % entspricht,
oder dass die senkrecht zur Scheitellinie verlaufende maximale Schenkellänge des ersten Schenkels (31) von der senkrecht zur Scheitellinie verlaufenden maximalen Schenkellänge des zweiten Schenkels (32) abweicht und wobei die maximale Schenkellänge des längeren Schenkels (31 oder 32) im Bereich zwischen 200 mm bis 1500 mm, vorzugsweise im Bereich zwischen 250 mm bis 1000 mm, besonders bevorzugt im Bereich zwischen 300 mm bis 800 mm und die maximale Schenkellänge des kürzeren Schenkels (31 oder 32) im Bereich zwischen 100 mm bis 1000 mm, vorzugsweise im Bereich zwischen 150 mm bis 800 mm, besonders bevorzugt im Bereich zwischen 200 mm bis 600 mm gewählt ist.

9. Verfahren zur Herstellung eines Glaskeramikbauteils (30),
wobei eine im Grünglaszustand befindliche Glasplatte (50) von einer Kante (53) bis zur gegenüberliegenden Kante (54) der Glasplatte (50) mittels einer Heizeinrichtung (70) erwärmt wird, bis eine erwärmte Zone (57) entsteht, deren Temperaturniveau ausreichend ist, um die Glasplatte (50) zu verformen,
wobei dann die Glasplatte (50) unter Einwirkung eines Umformwerkzeuges (80) derart verformt wird, dass eine einachsig gebogene Krümmung in der erwärmten Zone (57) entsteht, derart, dass eine Abwinklung mit einem Biegeabschnitt (35) gebildet ist, an den sich beidseitig zwei flächenförmige Glasschenkel (51, 52) anschließen,
wobei der Biegeabschnitt (35) im Bereich der Bauteilaußenseite (34) einen konvexen Biegebereich (36) bildet,
wobei der konvexe Biegebereich (36) an seinen beiden längsseitigen Endbereichen (E1, E2) im Bereich der gegenüberliegenden Kanten (53, 54) Erhebungen (38) aufweist, die radial nach außen gegenüber dem übrigen Bereich des konvexen Biegebereichs (36) vorstehen,
wobei dann die umgeformte Glasplatte (50) abgekühlt wird, bis sie ein Temperaturniveau erreicht, bei dem eine plastische Verformung in der erwärmten Zone (57) nicht mehr möglich ist,
wobei anschließend die umgeformte Glasplatte (50) in eine Keramisierungsform (60) eingestellt und keramisiert wird,
**dadurch gekennzeichnet,**
**dass** das Glaskeramikbauteil (30) nach der Keramisierung dergestalt ist, dass die maximale Erstreckung der Erhebungen (38) an den längsseitigen Endbereichen (E1, E2) in Radialrichtung des konvexen Biegebereichs (36), bezogen auf den Scheitelpunkt des Außenbiegeradius (Ra) im Abstand von 15 mm von dem jeweils zugeordneten längsseitigen Ende (E1, E2) größer als 0 mm und kleiner ist als 0,7 mm, dass die Glasschenkel (51, 52) mit ihren Schenkel-Außenseiten an Trägerflächen (61.2) von Trägern (61) der Keramisierungsform (60) abgestützt sind, dass die umgeformte Glasplatte (50) mit ihren Erhebungen (38) auf einem gemuldeten Abschnitt (64) der Keramisierungsform (60) im Bereich zwischen den Trägerflächen (61.2) unter Einwirkung der Gewichtskraft der umgeformten Glasplatte (50) aufsteht, und dass dann die umgeformte Glasplatte (50) mit der Keramisierungsform (60) in einen Keramisierungsofen verbracht und die umgeformte Glasplatte (50) darin zu einem Glaskeramikbauteil (30) keramisiert wird.

10. Verfahren nach Anspruch 9, **dadurch gekennzeichnet, dass** der gemuldete Abschnitt (64) der Keramisierungsform (60) einen teilzylindrischen Abschnitt aufweist, dessen Längserstreckung in Achsrichtung der einachsigen Krümmung der umgeformten Glasplatte (50) verläuft,
und dass der Radius des teilzylindrischen Abschnitts mit einer Abweichung von -1 mm bis +1 mm dem mittleren Radius des Biegeabschnitts entspricht.

11. Verfahren nach einem der Ansprüche 9 bis 10, **dadurch gekennzeichnet, dass** die im Grünglaszustand befindliche Glasplatte (50) zur Bildung der erwärmten Zone (57) mittels der Heizeinrichtung (70), aufweisend einen Linien-Gasbrenner, erwärmt wird,
dass dann, wenn die Glasplatte (50) ein für die Verformung ausreichendes Temperaturniveau erreicht hat, der Linien-Gasbrenner abgestellt und anschließend die erwärmte Zone (57) auf ein Temperaturniveau gekühlt wird, welches eine plastische Verformung noch zulässt,
und dass anschließend mittels eines Umformwerkzeuges (70) die plastische Verformung der Glasplatte (50) zwangsgeführt derart durchgeführt wird, dass die einachsig gebogene Krümmung entsteht.

12. Verfahren nach einem der Ansprüche 9 bis 11, **dadurch gekennzeichnet, dass** die den gegenüberliegenden Kanten (53, 54) der Glasplatte (50) zugeordneten Endbereiche (E1, E2) der erwärmten Zone (57) stärker gekühlt werden, als die übrigen Bereiche der erwärmten Zone (57) oder dass diese Endbereiche (E1, E2) ausschließlich gekühlt werden,
und/oder dass mittels der Heizeinrichtung (60) ortsaufgelöst Energie in die erwärmte Zone derart eingebracht wird, dass Bereiche mit geringerem und weitere Bereiche mit demgegenüber höherem Energieeintrag gebildet werden.

13. Verfahren nach einem der Ansprüche 9 bis 12, **dadurch gekennzeichnet, dass** während des Erwärmungsvorgangs die Glasplatte (50) derart, vorzugsweise mit Greifern (81), unterstützt wird, dass eine Verformung in der erwärmten Zone (57), während des Aufheizens verhindert ist.

14. Glaskeramikbauteil (30) gemäß einem der Ansprüche 1 bis 8, hergestellt nach einem Verfahren gemäß einem der Ansprüche 9 bis 13.

## Claims

1. Glass-ceramic component (30), having an angled portion which connects two sheet-like legs (31, 32) to one another at an angle along a bending section (35) running in the direction of a component height (h1),
wherein the angled section has a convex bending region (36) in the region of an outer side (34) of the component, which bending region (36) has an outer bending radius (Ra) and wherein the bending section (35) has elevations (38) at its two longitudinal end regions (E1, E2),
**characterized**
**in that** the maximum extent of the projections (38) at the longitudinal end regions (E1, E2) in the radial direction of the convex bending region (36), relative to the apex of the outer bending radius (Ra) at a distance of 15 mm from the respectively associated longitudinal end (E1, E2), is greater than 0 mm and less than 0.7 mm.

2. Glass-ceramic component according to claim 1, **characterized in that** the maximum extent of the projections (38) at the longitudinal end regions (E1, E2) in the radial direction of the convex bending region (36), relative to the apex of the outer bending radius (Ra) at a distance of 15 mm from the respectively associated longitudinal end (E1, E2), is smaller than 0.5 mm.

3. Glass-ceramic component according to claim 1 or 2, **characterized in that** the outer bending radius (Ra) in the middle of the component height (h1) is in the range between x mm to less than 15 mm, where x corresponds at least to the dimension of the thickness of the glass-ceramic component in the region of one of the two legs.

4. Glass-ceramic component according to one of claims 1 to 3, **characterized in that** the legs (31, 32) each have a leg height (h2, h3), **in that** these leg heights (h2, h3) each extend parallel to the component height (h1) extending along the bending section (35) and along the apex line of the outer bending radius (Ra) and at a lateral distance of 30 mm, measured perpendicularly to the component height (h1), and **in that** the difference:
leg height (h2) of the first leg (31) minus component height (h1)
and/or the difference:
leg height (h3) of the second leg (32) minus component height (h1)
≥ 0 and < 0.8 mm, preferably less than 0.6 mm, particularly preferably less than 0.5 mm.

5. Glass-ceramic component according to one of claims 1 to 4, **characterized in that** a linearly extending section (36.1) of the convex bending region extends in the direction of the component height (h1) and through the vertex of the outer bending radius (Ra) in the middle of the component height (h1), **in that** the linearly extending section (36.1) merges in the two longitudinal end regions (E1, E2) in each case into an ascending ramp section (38.1) of the elevation (38), **in that** the ramp section (38.1) is adjoined by a convexly curved, in particular a partially cylindrical, flattening (38.2) which delimits the projection (38) radially on the outside.

6. Glass-ceramic component according to claim 5, **characterized in that** the convexly curved, in particular partially cylindrical surface formed by the flattening (38.2) has an extension in the direction of the component height (h1) in the range between ≥ 0.1 mm and ≤ 4 mm and/or the arcuate extension of this convexly curved, in particular partially cylindrical surface in the direction transverse to the component height (h1) is in the range between ≥ 1 mm and ≤ 15 mm.

7. Glass-ceramic component according to claim 5 or 6, **characterized in that** the surface formed by the flattening (38.2) extends parallel to the linearly extending section (36.1) with a deviation of ±10°.

8. Glass-ceramic component according to one of the claims 1 to 7, **characterized in that** the maximum leg length of the legs (31,32) extending perpendicular to the apex line is selected in the range between 200 mm to 1000 mm, wherein the leg length of the first leg (31) corresponds to the leg length of the second leg (32) with a deviation of 5%,
or **in that** the maximum leg length of the first leg (31) extending perpendicularly to the apex line deviates from the maximum leg length of the second leg (32) extending perpendicularly to the apex line and wherein the maximum leg length of the longer leg (31 or 32) is selected in the range between 200 mm to 1500 mm, preferably in the range between 250 mm to 1000 mm, particularly preferably in the range between 300 mm to 800 mm, and the maximum leg length of the shorter leg (31 or 32) being selected in the range between 100 mm to 1000 mm, preferably in the range between 150 mm to 800 mm, particularly preferably in the range between 200 mm to 600 mm.

9. Method of manufacturing a glass-ceramic component (30),
wherein a glass plate (50) in the green glass state is heated from one edge (53) to the opposite edge (54) of the glass plate (50) by means of a heating device (70) until a heated zone (57) is formed whose temperature level is sufficient to deform the glass plate (50),
the glass plate (50) then being deformed under the action of a forming tool (80) in such a way that a uniaxially bent curvature is formed in the heated zone (57), in such a way that a bend is formed with a bending section (35) which is adjoined on both sides by two sheet-like glass legs (51, 52)
wherein the bending section (35) forms a convex bending region (36) in the region of the component outer side (34),
the convex bending region (36) having, at its two longitudinal end regions (E1, E2), in the region of the opposite edges (53, 54), elevations (38) which project radially outwards with respect to the remaining region of the convex bending region (36), wherein then the formed glass plate (50) is cooled until it reaches a temperature level at which plastic deformation in the heated zone (57) is no longer possible,
then placing the formed glass plate (50) in a ceramization mold (60) and ceramizing it,
**characterized in**
**in that** the glass-ceramic component (30) after ceramization is such that the maximum extent of the elevations (38) at the longitudinal end regions (E1, E2) in the radial direction of the convex bending region (36), relative to the vertex of the outer bending radius (Ra) at a distance of 15 mm from the respectively associated longitudinal end (E1, E2) is greater than 0 mm and less than 0.7 mm, **in that** the glass legs (51, 52) rest with their leg outer sides on support surfaces (61. 2) of supports (61) of the ceramization mold (60),
**in that** the shaped glass plate (50) stands up with its elevations (38) on a troughed section (64) of the ceramization mold (60) in the region between the support surfaces (61.2) under the action of the weight of the shaped glass plate (50), and **in that** the shaped glass plate (50) is then brought with the ceramization mold (60) into a ceramization furnace and the shaped glass plate (50) is ceramized therein to form a glass-ceramic component (30).

10. Method according to claim 9, **characterized in that** the moulded section (64) of the ceramization mould (60) has a part-cylindrical section whose longitudinal extension is in the axial direction of the uniaxial curvature of the shaped glass plate (50),
and **in that** the radius of the part-cylindrical section corresponds, with a deviation of -1 mm to +1 mm, to the mean radius of the bending section.

11. Method according to any one of claims 9 to 10, **characterized in that** the glass plate (50) in the green glass state is heated to form the heated zone (57) by means of the heating means (70) comprising a line gas burner,
**in that**, when the glass plate (50) has reached a temperature level sufficient for deformation, the line gas burner is switched off and then the heated zone (57) is cooled to a temperature level which still permits plastic deformation,
and **in that** subsequently, by means of a forming tool (70), the plastic deformation of the glass plate (50) is carried out in a positively guided manner in such a way that the uniaxially bent curvature is produced.

12. Process according to one of the claims 9 to 11, **characterized in that** the end regions (E1, E2) of the heated zone (57) associated with the opposite edges (53, 54) of the glass plate (50) are cooled to a greater extent than the remaining regions of the heated zone (57) or **in that** these end regions (E1, E2) are cooled exclusively, and/or **in that** energy is introduced into the heated zone by means of the heating device (60) in a spatially resolved manner in such a way that regions with a lower energy input and further regions with a higher energy input in comparison thereto are formed.

13. Method according to one of claims 9 to 12, **characterized in that** during the heating process the glass plate (50) is supported, preferably with grippers (81), in such a way that deformation in the heated zone (57) is prevented during heating.

14. Glass-ceramic component (30) according to any one of claims 1 to 8, manufactured by a method according to any one of claims 9 to 13.

## Revendications

1. Composant vitrocéramique (30), avec un coude qui relie angulairement deux branches (31, 32) en forme de surface le long d'une section de flexion (35) s'étendant en direction d'une hauteur de composant (h1),
le coude présentant, dans la zone d'un côté extérieur (34) de la pièce, une zone de pliage convexe (36) qui présente un rayon de pliage extérieur (Ra),
et la section de pliage (35) présentant des bosses (38) au niveau de ses deux zones d'extrémité longitudinales (E1, E2),
**caractérisé en ce que**
**en ce que** l'extension maximale des bosses (38) au niveau des zones d'extrémité longitudinales (E1, E2) dans la direction radiale de la zone de cintrage convexe (36), par rapport au sommet du rayon de cintrage extérieur (Ra) à une distance de 15 mm de l'extrémité longitudinale (E1, E2) respectivement associée, est supérieure à 0 mm et inférieure à 0,7 mm.

2. Composant vitrocéramique selon la revendication 1, **caractérisé en ce que** l'extension maximale des bosses (38) sur les zones d'extrémité longitudinales (E1, E2) dans la direction radiale de la zone de bombage convexe (36), par rapport au sommet du rayon de bombage extérieur (Ra) à une distance de 15 mm de l'extrémité longitudinale (E1, E2) respectivement associée, est inférieure à 0,5 mm.

3. Composant vitrocéramique selon la revendication 1 ou 2, **caractérisé en ce que** le rayon de courbure extérieur (Ra) au milieu de la hauteur du composant (h1) est compris entre x mm et moins de 15 mm, x correspondant au moins à la mesure de l'épaisseur du composant vitrocéramique dans la zone de l'une des deux branches.

4. Élément de construction en vitrocéramique selon l'une des revendications 1 à 3, **caractérisé en ce que** les branches (31, 32) présentent chacune une hauteur de branche (h2, h3), **en ce que** ces hauteurs de branche (h2, h3) s'étendent respectivement parallèlement à la hauteur d'élément de construction (h1) s'étendant le long de la section de cintrage (35) et le long de la ligne de sommet du rayon de cintrage extérieur (Ra) et à une distance latérale de 30 mm, mesurée perpendiculairement à la hauteur d'élément de construction (h1), et **en ce que** la différence :
Hauteur de la branche (h2) de la première branche (31) moins hauteur du composant (h1)
et/ou la différence :
Hauteur de la branche (h3) de la deuxième branche (32) moins hauteur du composant (h1)
≥ 0 et < 0,8 mm, de préférence est inférieure à 0,6 mm, de manière particulièrement préférée est inférieure à 0,5 mm.

5. Élément de construction en vitrocéramique selon l'une des revendications 1 à 4, **caractérisé en ce qu'**une section (36.1) s'étendant linéairement de la zone de courbure convexe s'étend dans la direction de la hauteur de l'élément de construction (h1) et passe par le sommet du rayon de courbure extérieur (Ra) au milieu de la hauteur de l'élément de construction (h1), **en ce que** la section (36. 1) se transforme dans les deux zones d'extrémité longitudinales (E1, E2) respectivement en une section de rampe montante (38.1) du relief (38), **en ce que** la section de rampe (38.1) est suivie d'un méplat (38.2) convexe, en particulier partiellement cylindrique, qui délimite le relief (38) radialement vers l'extérieur.

6. Composant vitrocéramique selon la revendication 5, **caractérisé en ce que** la surface bombée convexe, en particulier partiellement cylindrique, formée par le méplat (38.2) a une extension dans la direction de la hauteur du composant (h1) comprise entre ≥ 0,1 mm et ≤ 4 mm et/ou l'extension en forme d'arc de cette surface bombée convexe, en particulier partiellement cylindrique, dans la direction transversale à la hauteur du composant (h1) est comprise entre ≥ 1 mm et ≤ 15 mm.

7. Composant vitrocéramique selon la revendication 5 ou 6, **caractérisé en ce que** la surface formée par le méplat (38.2) s'étend parallèlement à la section (36.1) s'étendant de manière linéaire, avec un écart de ±10°.

8. Élément de construction en vitrocéramique selon l'une des revendications 1 à 7, **caractérisé en ce que** la longueur maximale des branches (31, 32) perpendiculaire à la ligne de crête est choisie dans la plage comprise entre 200 mm et 1000 mm, la longueur de la première branche (31) correspondant à la longueur de la deuxième branche (32) avec un écart de 5 %,
ou **en ce que** la longueur de branche maximale de la première branche (31) s'étendant perpendiculairement à la ligne de crête diffère de la longueur de branche maximale de la deuxième branche (32) s'étendant perpendiculairement à la ligne de crête et la longueur de branche maximale de la branche la plus longue (31 ou 32) étant comprise entre 200 mm et 1500 mm, de préférence dans la plage entre 250 mm et 1000 mm, de manière particulièrement préférée dans la plage entre 300 mm et 800 mm et la longueur de branche maximale de la branche plus courte (31 ou 32) est choisie dans la plage entre 100 mm et 1000 mm, de préférence dans la plage entre 150 mm et 800 mm, de manière particulièrement préférée dans la plage entre 200 mm et 600 mm.

9. Procédé de fabrication d'un élément vitrocéramique (30),
dans lequel une plaque de verre (50) se trouvant à l'état de verre vert est chauffée d'un bord (53) jusqu'au bord opposé (54) de la plaque de verre (50) au moyen d'un dispositif de chauffage (70), jusqu'à ce qu'il se forme une zone chauffée (57) dont le niveau de température est suffisant pour déformer la plaque de verre (50),
la plaque de verre (50) étant ensuite déformée sous l'action d'un outil de formage (80) de telle sorte qu'il se forme une courbure uniaxiale dans la zone chauffée (57), de telle sorte qu'il se forme un coude avec une section de courbure (35) à laquelle se raccordent des deux côtés deux branches de verre (51, 52) en forme de surface,
la section de pliage (35) formant une zone de pliage convexe (36) dans la zone de la face extérieure (34) de la pièce,
la zone de bombage convexe (36) présentant sur ses deux zones d'extrémité (E1, E2) côté longitudinal, dans la zone des arêtes (53, 54) opposées, des surélévations (38) qui font saillie radialement vers l'extérieur par rapport au reste de la zone de bombage convexe (36),
la plaque de verre déformée (50) étant ensuite refroidie jusqu'à ce qu'elle atteigne un niveau de température pour lequel une déformation plastique dans la zone chauffée (57) n'est plus possible,
la plaque de verre déformée (50) étant ensuite placée dans un moule de céramisation (60) et céramisée,
**caractérisé en ce que**
**en ce que** le composant vitrocéramique (30) après la céramisation est tel que l'extension maximale des bosses (38) au niveau des zones d'extrémité longitudinales (E1, E2) dans la direction radiale de la zone de pliage convexe (36), par rapport au sommet du rayon de courbure extérieur (Ra) à une distance de 15 mm de l'extrémité longitudinale (E1, E2) respectivement associée, est supérieure à 0 mm et inférieure à 0,7 mm, que les branches en verre (51, 52) sont fixées par leurs côtés extérieurs de branche à des surfaces de support (61. 2) de supports (61) du moule de céramisation (60),
**en ce que** la plaque de verre (50) déformée se dresse avec ses saillies (38) sur une section (64) en forme d'auge du moule de céramisation (60) dans la zone entre les surfaces de support (61.2) sous l'effet du poids de la plaque de verre (50) déformée, et **en ce que** la plaque de verre (50) déformée est ensuite amenée avec le moule de céramisation (60) dans un four de céramisation et la plaque de verre (50) déformée y est céramisée en un composant vitrocéramique (30).

10. Procédé selon la revendication 9, **caractérisé en ce que** la partie évidée (64) du moule de céramisation (60) présente une partie partiellement cylindrique dont l'extension longitudinale s'étend dans la direction axiale de la courbure uniaxiale de la plaque de verre (50) mise en forme,
et **en ce que** le rayon de la portion partiellement cylindrique correspond, avec un écart de -1 mm à +1 mm, au rayon moyen de la portion de bombage.

11. Procédé selon l'une des revendications 9 à 10, **caractérisé en ce que** la plaque de verre (50) à l'état de verre vert est chauffée pour former la zone chauffée (57) au moyen du dispositif de chauffage (70) comprenant un brûleur linéaire à gaz,
**en ce que**, lorsque la plaque de verre (50) a atteint un niveau de température suffisant pour la déformation, le brûleur linéaire à gaz est arrêté et la zone chauffée (57) est ensuite refroidie à un niveau de température qui autorise encore une déformation plastique,
et **en ce qu'**ensuite, au moyen d'un outil de formage (70), la déformation plastique de la plaque de verre (50) est effectuée de manière forcée de telle sorte que la courbure uniaxiale soit obtenue.

12. Procédé selon l'une des revendications 9 à 11, **caractérisé en ce que** les zones d'extrémité (E1, E2) de la zone chauffée (57) associées aux bords opposés (53, 54) de la plaque de verre (50) sont plus fortement refroidies que les autres zones de la zone chauffée (57) ou **en ce que** ces zones d'extrémité (E1, E2) sont exclusivement refroidies,
et/ou **en ce que**, au moyen du dispositif de chauffage (60), de l'énergie est apportée de manière localisée dans la zone chauffée de telle sorte que des zones avec un apport d'énergie plus faible et d'autres zones avec un apport d'énergie plus élevé par rapport à celles-ci sont formées.

13. Procédé selon l'une des revendications 9 à 12, **caractérisé en ce que**, pendant le processus de chauffage, la plaque de verre (50) est soutenue, de préférence par des pinces (81), de telle sorte qu'une déformation dans la zone chauffée (57) est empêchée pendant le chauffage.

14. Composant vitrocéramique (30) selon l'une quelconque des revendications 1 à 8, fabriqué par un procédé selon l'une quelconque des revendications 9 à 13.
